# EUROPÄISCHE PATENTSCHRIFT

(11) **EP 1 965 965 B1**
(45) Veröffentlichungstag und Bekanntmachung des Hinweises auf die Patenterteilung: **31.01.2018**
(21) Anmeldenummer: 06829619.3
(22) Anmeldetag: 11.12.2006
(51) Int. Cl.: B29C 47/90

(54) **BLASFOLIENEXTRUSIONSANLAGE**
BLOWN FILM EXTRUSION INSTALLATION
INSTALLATION D'EXTRUSION POUR FEUILLE SOUFFLEE

(30) Priorität: 21.12.2005 EP 05028032
(43) Veröffentlichungstag der Anmeldung: 10.09.2008
(73) Patentinhaber: Windmöller & Hölscher KG, 49525 Lengerich (DE)
(72) Erfinder: FRISCHE, Holger, 49205 Hasbergen (DE); RATZ, Gerd, 49536 Lienen (DE); OBERDALHOFF, Tim, 49536 Lienen (DE)
(86) Internationale Anmeldenummer: PCT/EP2006/012068
(87) Internationale Veröffentlichungsnummer: WO 2007/079899

(56) Entgegenhaltungen:
- EP-A- 1 254 757
- CA-A1- 2 216 177
- JP-A- 58 179 621
- US-A1- 3 980 418
- US-A1- 4 388 061
- US-A1- 4 408 970
- US-A1- 2004 086 587

## Beschreibung

Die Erfindung betrifft eine Blasfolienextrusionsanlage gemäß dem Oberbegriff des Anspruchs 1.

Solche Blasfolienextrusionsanlagen sind bekannt und stehen bereits seit langer Zeit im Einsatz. Solchen Anlagen werden Kunststoffe in granulierter Form zugeführt, die dann in Extrudern unter hoher Druckeinwirkung zu einer viskosen Masse plastifiziert werden. Diese Masse, die aufgrund des Druckes eine hohe Temperatur aufweist, wird in einem Blaskopf ringförmig ausgebildet und entweicht dem Blaskopf durch eine Ringdüse. Unmittelbar nach dem Verlassen der Ringdüse bildet die Masse bereits einen Folienschlauch. Dieser Folienschlauch kann jedoch, da er noch nicht vollständig abgekühlt ist, in seinem Durchmesser verändert werden. In der Regel wird der Durchmesser vergrößert, indem in den Innenraum des Folienschlauches Druckluft eingeblasen wird. Damit der Folienschlauch immer einen konstanten Durchmesser aufweist, wird er auf Abstand zu oder direkt entlang von Folienführungselementen geführt. Diese Anordnung der Folienführungselemente wird auf dem Gebiet der Blasfolienextrusionsanlagen als Kalibrierkorb bezeichnet. Nach dem Durchlaufen des Kalibrierkorbs wird der Folienschlauch, der sich nun verfestigt hat, entlang weiterer Folienführungselemente geführt, die den Schlauch flachlegen. Diese Flachlegeeinheit führt den Folienschlauch einer Abquetschung zu, so dass dieser eine doppellagige Folienbahn bildet. Unter "Abquetschung" ist neben dem vollständigen Flachlegen des Folienschlauches auch ein nicht vollständiges Flachlegen zu verstehen. Dem nicht vollständigen Flachlegen können noch Bearbeitungsschritte, wie beispielsweise das Längsschneiden entlang der Falzkanten, folgen. Die Folienführungselemente des Kalibrierkorbs können flächige Elemente aus rutschigem Material, aber auch Rollen sein. In diesem Bereich sind Teflonrollen, Filzrollen, Pearlleisten, sowie bürsten- oder besenartige Elemente zum Einsatz gekommen. Ziel all dieser Maßnahmen ist, die Folie zuverlässig zu führen und in diesem Zusammenhang durchaus eine Kraft auf die Folie auszuüben, andererseits jedoch keine Beschädigungen an der noch heißen, gerade extrudierten Folie zu verursachen.
Daher werden seit einiger Zeit auch Kalibrierkörbe verwendet, die Folienführungselemente aufweisen, die auf ihrer dem Schlauch zugewandten Seite ein Luftpolster aufweisen und den Schlauch berührungslos führen.

Dazu sind diese Schlauchführungselemente mit Bohrungen durchsetzt, die auf der dem Folienschlauch abgewandten Seite mit Druckluft beaufschlagt werden. Die durch die Bohrungen, welche beispielsweise Durchmesser von 0,5 mm aufweisen, hindurch strömende Druckluft hält den Folienschlauch auf Abstand, so dass dieser berührungslos geführt wird. Auf diese Weise werden Beschädigungen des Folienschlauches vermieden.

Jedoch müssen die Bohrungen, damit die Folienführungselemente ihre Stabilität nicht einbüßen, einen gewissen Abstand voneinander aufweisen. Dies hat jedoch zur Folge, dass das Luftpolster, welches den Folienschlauch führt, nicht gleichmäßig auf den Umfang des Folienschlauches wirkt. Dadurch wird die Führungsgenauigkeit beeinträchtigt. Größere Ungenauigkeiten im Durchmesser des Folienschlauches sind die Folge. Auch neigt der Folienschlauch aufgrund der ungleichmäßigen Druckluftbeaufschlagung zum Flattern.

Daher ist beispielsweise von der EP 1488 910 A1 vorgeschlagen worden, ein poröses oder mikroporöses Material zum Aufbau der Folienführungselemente zu verwenden, welches Luft durch eine Vielzahl kleinerer Löcher extrudiert und so ein besonders geeignetes Luftpolster herstellt. Als Material, welches diese Vielzahl von kleinen Löchern enthält, wird auch ein poröses, vorzugsweise ein mikroporöses Material - beispielsweise Sintermaterial - vorgeschlagen.

Solche Materialien weisen eine Vielzahl von durchgängigen Poren auf. Daher können die Folienführungselemente auf der dem Folienschlauch abgewandten Seite mit Druckluft beaufschlagt werden, die dann auf der dem Folienschlauch zugewandten Seite ein nahezu gleichmäßiges Luftpolster bildet, mit welchem der Folienschlauch mit hoher Güte geführt werden kann.
Als Material, welches diese Eigenschaften besitzt, wird vorzugsweise gesintertes Material eingesetzt.
Die vorgenannten Arten der Folienführungselemente führen in der Regel einen Teilbereich des Umfanges des Schlauches. Oft ist die dem Schlauch zugewandte Fläche, mit der die Folie geführt wird, beziehungsweise die Fläche, die das Luftpolster stützt, welches den Schlauch führt, gebogen, um sich besser an die runde Umfangsfläche des Kreises anzuschmiegen. Dies ist zum Beispiel in der bereits genannten EP 1 488 910 A1 deutlich zu sehen.

Soll bei einer solchen Vorrichtung das Format - also in diesem Fall der Durchmesser der Querschnittsfläche - des Folienschlauchs geändert werden, so müssen die Relativpositionen der Folienführungselemente verändert werden. Dies geschieht in der Regel, indem die Position der Folienführungselemente in der radialen Richtung der Folienblase geändert wird. Zu diesem Zweck verfügen die Folienführungselemente der EP 1 488 910 A1 über individuelle Einstellmittel. Diese müssen sorgfältig bedient werden, um sicherzustellen, dass die runde Form des Folienquerschnitts erhalten bleibt.

Das Patent US 3 980 418 und die Veröffentlichung EP 1 254 offenbaren Kalibriervorrichtungen, bei denen einendig gelagerte Schwenkarme vorgesehen sind, welche an ihren zweiten Enden Folienführungselemente tragen. Zwischen jeweils zwei Schenkarmen sind Kopplungselemente vorgesehen, so dass die Schwenkbewegung eines Schwenkarms zu einer Schwenkbewegung aller anderen Schwenkarme führt, um eine gleichmäßige Einstellung durchführen zu können.

Die CA 2 216 177 offenbart ebenfalls Schwenkarme, die jedoch an ihren zweiten Enden gelagert sind. Diese Lagerung ist gegenüber der Lagerung des anderen Endes verdrehbar. Die Schwenkarme stellen jedoch auch gleichzeitig die Folienführungselemente dar. Der gesamte Aufbau dieser Kalibriervorrichtung ist sehr kompliziert.

Es ist die Aufgabe der vorliegenden Erfindung, diese Einstellarbeiten zu erleichtern, wobei die dem Schlauch zugewandten Flächen der Folienführungselemente stets tangential an der runden Querschnittsfläche des Schlauches anliegen.

Diese Aufgabe wird durch sämtliche Merkmale des Anspruchs 1 gelöst. Danach ist vorgsehen, dass die Elemente zur mechanischen Zwangskopplung Stangen umfassen, die jeweils in zumindest einem Schiebelager gelagert sind, wobei die Folienführungselemente verdrehfest mit den Stangen verbunden sind, und die zumindest eine Stange mechanisch entweder direkt oder über ein Zwischenelement an zumindest einer Haltestange drehbar angelenkt ist, wobei die zumindest eine Haltestange ihrerseits drehbar an einem Rahmen der Kalibriervorrichtung angelenkt ist. Ein weiterer Vorteil der Verwendung dieser Kopplungsmittel liegt in dem Geschwindigkeitsgewinn der Einstellung, da die Kopplung eine Gleichzeitigkeit der Einstellvorgänge herbeiführen kann. Es erscheint sogar möglich, den Durchmesser des Folienschlauches während des Betriebes der Anlage zu verändern. Das war bisher aufgrund der Beschränkungen durch die individuelle Einstellbarkeit der Position der Führungselemente nicht möglich. Es versteht sich, dass der Begriff "zumindest zwei Führungselemente" jede Zahl zwischen zwei und der Anzahl der Gesamtheit der Führungselemente umfasst.
Verschiedene Ausführungsbeispiele der Erfindung lassen sich automatisch von einer Steuereinheit aus durchführen und sind so mit einem stark automatisierten Auftragswechsel an einer Blasfolienmaschine kombinierbar. Vorteilhaft sind Kopplungsmittel, die die Bewegung von Führungselementen derart koppeln, dass die Bewegung der jeweiligen Führungselemente in der radialen Richtung der Folienblase den gleichen Streckenbetrag aufweist. Natürlich setzt die Kopplung die "Inbetriebnahme" der Kopplungsmittel voraus. So müssen ausschließlich mechanisch arbeitende Kopplungsmittel natürlich in Wirkverbindung mit dem oder den zu koppelnden Führungselementen stehen. Eine solche Wirkverbindung wird jedoch in der Regel durch das Lösen reversibler Verbindungselemente - wie von Schrauben - trennbar sein. Auch bei einer gemeinsamen Steuerung oder Regelung von Antrieben, die auf verschiedene Führungselemente einwirken, kann die Kopplung - oft auch als "virtuelle Achse" bezeichnet - ein- oder abschaltbar gestaltet sein.
Eine automatische, weitgehend manuelle erfindungsgemäße Einstellung der Position der Führungselemente kann Lineartriebe oder Motoren enthalten. Falls drehmomentbereitstellende Motoren verwendet werden, ist es vorteilhaft, deren Drehmoment mit Spindeln und Muttern in Kraft umzusetzen. Die Folienführungselemente können von dieser Kraft, beispielsweise auf einer Schlittenführung, bewegt werden.

Weitere vorteilhafte Ausgestaltungen der Erfindung sind den Unteransprüchen sowie der Zeichnung zu entnehmen. Die einzelnen Figuren zeigen
- Fig. 1: eine Blasfolienextrusionsanlage gemäß dem Stand der Technik
- Fig. 2: einen erfindungsgemäßen Kalibrierkorb in der Aufsicht; Blickwinkel wie in Fig. 1 durch Pfeile angedeutet
- Fig. 3: denselben erfindungsgemäßen Kalibrierkorb in der Aufsicht, wobei ein kleinerer Folienschlauchdurchmesser eingestellt ist als in Fig. 2; Blickwinkel wie in Fig. 1 durch Pfeile angedeutet
- Fig. 4: einen erfindungsgemäßen Kalibrierkorb in der Aufsicht, wobei ein kleinerer Folienschlauchdurchmesser eingestellt ist als in Fig. 2; Blickwinkel wie in Fig. 1 durch Pfeile angedeutet

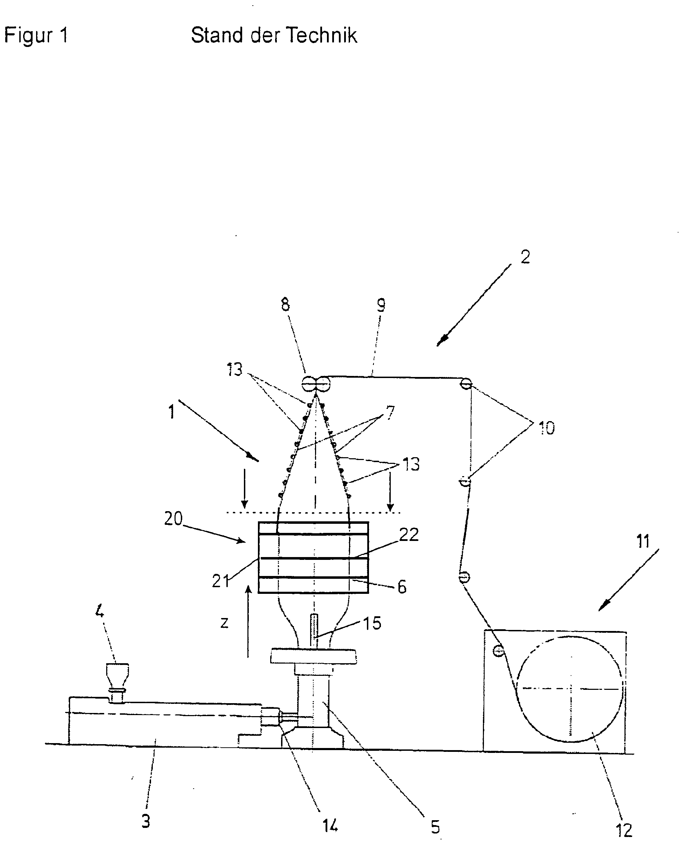

Fig. 1 zeigt eine bekannte Blasfolienextrusionsanlage 1. Dem Einfüllstutzen 4 wird ein Kunststoff zugeführt, der dann in dem Extruder 3 plastifiziert wird. Die entstandene Masse wird über eine Verbindungsleitung 14 dem Blaskopf 5 zugeführt, welche einen Folienschlauch 9 bildet. Dabei verlässt der Folienschlauch 9 den Blaskopf 5 durch eine nicht sichtbare Ringdüse in Transportrichtung z. Aufgrund der Zuführung von Druckluft durch den Gebläsestutzen 12 wird der Folienschlauch unmittelbar nach Verlassen des Blaskopfes 5 aufgeweitet. Der Durchmesser des Folienschlauches 9 wird jedoch durch den Kalibrierkorb 20 begrenzt. Innerhalb des Kalibrierkorbes 20 wird der Folienschlauch 9 von Platten 28 geführt, durch welche Druckluft auf den Folienschlauch gerichtet wird. Der Kalibrierkorb 20 besteht zudem aus einem Rahmen 21 und Querträgern 22 und 6. Nach dem Verlassen des Kalibrierkorbes 20 gelangt der Folienschlauch 9 in eine Flachlegeeinheit 21, in welcher der Folienschlauch nahezu oder vollständig zu einer doppellagigen Folienbahn umgeformt wird. Dabei wird der Folienschlauch 9 zwischen Paaren von Führungselementen 7, 13 geführt, die im Verlauf der Transportrichtung z einen immer geringeren Abstand voneinander einnehmen. Die vollständige Flachlegung erfolgt durch eine Abquetschvorrichtung, die aus einem Paar von Abquetschwalzen 8 besteht. Die Folienbahn 9 kann nun durch eine nicht gezeigte Reversiervorrichtung geführt werden, oder, wie im Falle der gezeigten Vorrichtung, direkt über Umlenkwalzen 10 einer Wickelvorrichtung 11 zugeführt werden, wo die Folienbahn 9 zu einem Wickel 12 verarbeitet wird.

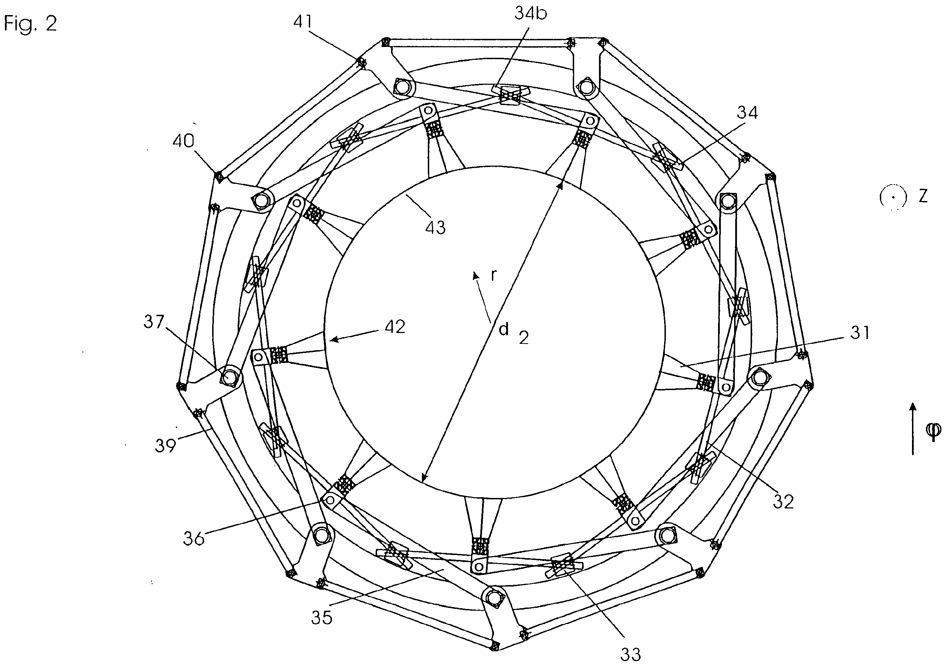

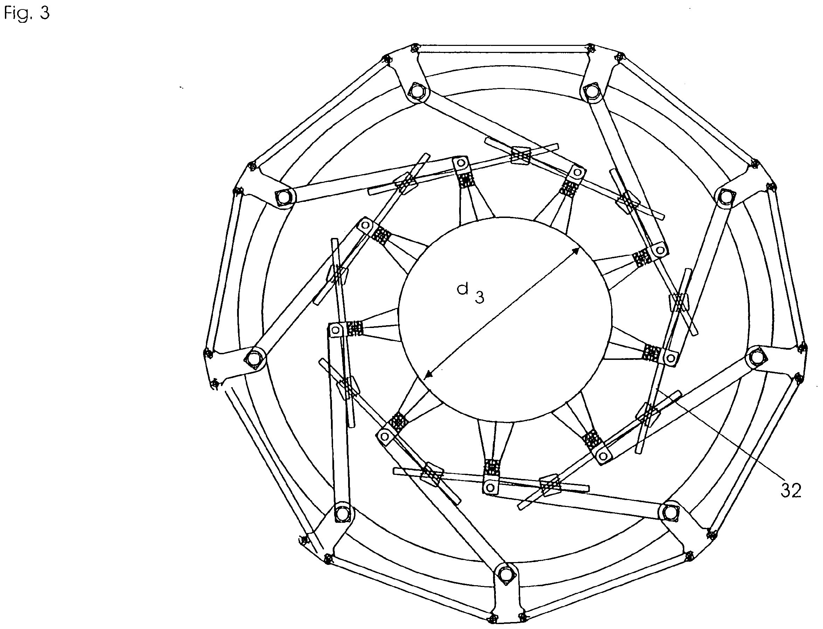

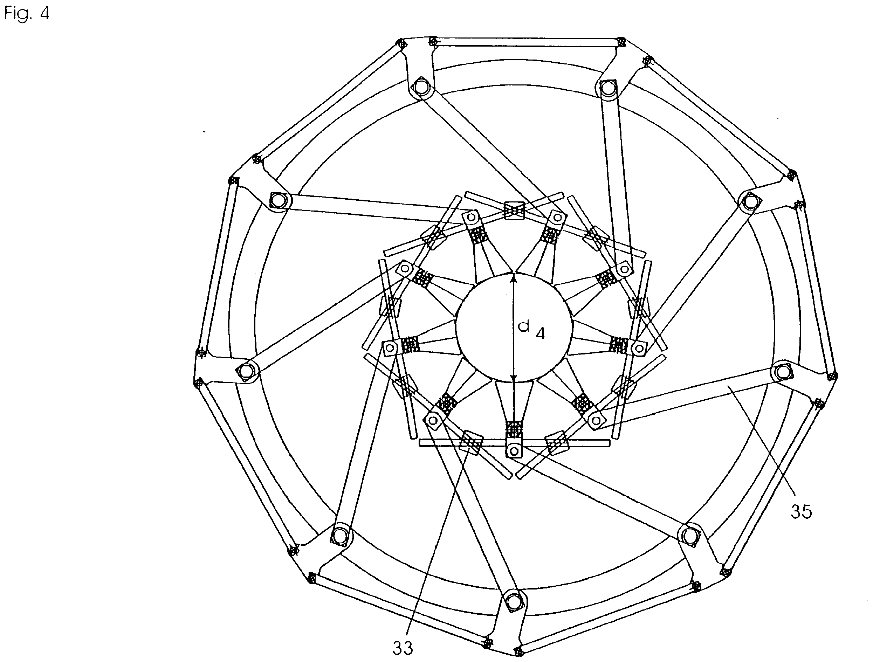

Die Figuren 2 bis 4 zeigen eine Aufsicht auf einen Kalibrierkorb 40, der mit den Folienführungselementen 31 einen Folienschlauch 43 führt. Es ist anhand der Pfeile D2 bis D4 deutlich gezeigt, dass der Durchmesser der Folienblase 43 in den Figuren 2 bis 4 abnimmt. Der Durchmesser der Folienblase wird jedoch unter anderem durch die Art und Weise der Anstellung der Folienführungselemente 31 an den Folienschlauch 43 definiert. Mit dem erfindungsgemäßen Kalibrierkorb ist diese Anstellbewegung der Folienführungselemente derart gekoppelt, dass die dem Schlauch 43 zugewandten Flächen stets tangential an der runden Querschnittsfläche des Schlauches 43 anliegen. Diesen Zustand kann man auch beschreiben, indem man sagt, die Normalen auf diesen Flächen zeigen stets, wie alle drei Figuren 2 bis 4 zeigen, auf den Mittelpunkt des Schlauches 43, der seinerseits bei optimaler Ausrichtung über dem Mittelpunkt des Blaskopfes 5 liegt. Vorteilhafterweise kann dieser Zustand durch eine Anlenkung 36 der Folienführungselemente um eine Achse, die parallel zur Hauptträgheitsachse des Folienschlauches 9 liegt, herbeigeführt werden. Diese Anlenkung 36 sollte an einem Halteelement wie der Haltestange 35 vorgesehen sein. Das Ergebnis kann eine freie Schwenkbarkeit des Folienführungselementes 31 - zumindest in einem spitzen Winkelbereich - oder eine Führung desselben durch ein weiteres Element des Kalibrierkorbes - hier der Koppelstange 32 - sein.
Im vorliegenden Ausführungsbeispiel sind die Flächen 42 aus dem Blickwinkel des Betrachters derart bogenförmig gestaltet (in der r-ϕ-Ebene), dass sie sich der runden Querschnittsform des Schlauches 43 anschmiegen. Die Flächen bestehen hier aus durchlöchertem oder porösem, bevorzugt gesintertem Material. Durch eine Beaufschlagung der Innenseiten der Flächen 42 mit Druckluft entsteht an der dem Schlauch zugewandten Außenseite der Fläche 42 ein Luftpolster. Mit Hilfe dieses Luftpolsters führt das Führungselement 31 die Folie berührungslos. Ein Folienführungselement könnte jedoch auch die Führung des Schlauches mit einer Bürste, einer Rolle oder einer Gleitfläche besorgen.
In Bezug auf die Folienführungselemente 31 kann sich eine Veränderbarkeit des Krümmungsradius der dem Schlauch 43 zugewandten Fläche 42 positiv bemerkbar machen. Diese kann beispielsweise durch zusätzliche Stellelemente, die diese Fläche krümmen, herbeigeführt werden. Auf diese Weise kann gewährleistet werden, dass die dem Schlauch zugewandte Fläche 42 großflächig an dem Schlauch 43 anliegt, wenn sich der Krümmungsradius des Schlauches in Folge einer Formatverstellung ändert.

Im vorliegenden Ausführungsbeispiel sind die Folienführungselemente 31 verdrehfest mit den Koppelstangen 32 verbunden. Die Koppelstangen werden durch Schiebelager 33 derart geführt, dass sie stets tangential zur Folienblase 43 ausgerichtet sind. Dies geschieht hier, indem eine Koppelstange je von zwei Schiebelagern 33 geführt wird. In den Figuren sind die zwei unterschiedlichen Stangen zugeordneten Schiebelager übereinander dargestellt. Die Folienführungselemente 31 sind auch über die Gelenke 36 drehbar an Haltestangen 35 angelenkt. Diese 31 sind ihrerseits wieder über die Gelenke 37 drehbar an den drehbaren Hebeln 38, die an dem Rundgestell 44 bevorzugt drehbar befestigt sind, angelenkt. Die Hebel 38 stehen über ihre endseitigen Gelenke 40 und 41 und die Koppelstangen 39 der Hebel miteinander in Verbindung.
Vorteilhaft ist es bei einem Kalibrierkorb, mehrere Ebenen der in den Figuren dargestellten Funktionselemente miteinander zu vereinen. So werden in der Regel in der axialen Richtung des Folienschlauchs z mehrere Folienführungselemente 31 aufeinander abfolgen. Die Position der in der axialen Richtung z aufeinander abfolgenden Folienführungselemente 31 kann in Umfangsrichtung ϕ gegeneinander verschoben sein.

| **Bezugszeichenliste** | |
|---|---|
| 1 | Blasfolienextrusionsanlage |
| 2 | |
| 3 | Extruder |
| 4 | Einfüllstutzen. |
| 5 | Blaskopf |
| 6 | Querträger |
| 7 | Führungselement |
| 8 | Abquetschwalze |
| 9 | Folienschlauch |
| 10 | Umlenkwalzen |
| 11 | Wickelvorrichtung |
| 12 | Wickel |
| 13 | Führungselement der Flachlegung |
| 14 | Verbindungsleitung |
| 15 | Gebläsestutzen |
| 20 | Kalibrierkorb |
| 21 | Flachlegeeinheit |
| 22 | Querträger |
| 30 | Kalibrierkorb |
| 31 | Folienführungselemente |
| 32 | Koppelstange |
| 33 | Schiebelager |
| 34 a, b | Enden der Koppelstangen |
| 35 | Haltestange |
| 36 | Gelenk der Haltestange am Folienführungselement |
| 37 | Gelenk der Haltestange am Hebel |
| 38 | Hebel |
| 39 | Koppelstange der Hebel |
| 40 | Gelenk der Hebel |
| 41 | Gelenk der Hebel |
| 42 | dem Schlauch 43 zugewandte Fläche des Folienführungselements |
| 43 | Schlauch, Folienschlauch |
| 44 | Rundgestell |
| z | Transportrichtung des Folienschlauches 9 |
| ϕ | Umfangsrichtung des Folienschlauches |
| r | radiale Richtung des Folienschlauches |
| R ₂₋₄ | Durchmesser des Folienschlauches in Figuren 2 bis 4 |

## Patentansprüche

1. Blasfolienextrusionsanlage (1), welche folgende Merkmale aufweist:
- einen ringförmigen Düsenspalt, aus welchem der Folienschlauch (9) extrudierbar ist,
- Flachlege-(7,13) oder Abquetschvorrichtungen (8), welche den Folienschlauch (9) zusammenlegen,
- eine Kalibriervorrichtung (20,30), welche zwischen dem Düsenspalt und den Flachlege-(7,13) oder Abquetschvorrichtungen (8) angeordnet ist und welche zumindest zwei Folienführungselemente (31) umfasst, mit welchen der Folienschlauch (9) derart führbar ist, dass er seinen runden Querschnitt beibehält,
- wobei der Durchmesser des Folienschlauchs (9,43) durch eine Veränderung der Relativposition der zumindest zwei Folienführungselemente (31) einstellbar ist,
- Kopplungsmittel (32,33,35,38,39), welche die Bewegung zumindest zweier Folienführungselemente (31) miteinander koppeln
- die Kopplungsmittel (32,33,35,38,39) Elemente zur mechanischen Zwangskopplung der Bewegung zumindest zweier Folienführungselemente (31) umfassen
**dadurch gekennzeichnet,**
- **dass** die Elemente zur mechanischen Zwangskopplung Stangen (32) umfassen, die jeweils in zumindest einem Schiebelager (33) gelagert sind, wobei die Folienführungselemente (31) verdrehfest mit den Stangen (32) verbunden sind,
- **dass** jede Stange (32) mechanisch entweder direkt oder über ein Zwischenelement an zumindest einer Haltestange (35) drehbar angelenkt ist, wobei die zumindest eine Haltestange (35) ihrerseits drehbar an einem Rahmen (44) der Kalibriervorrichtung angelenkt ist.

2. Blasfolienextrusionsanlage (1) nach einem der vorstehenden Ansprüche, **dadurch gekennzeichnet, dass**
die Kopplungsmittel (32,33,35,38,39) derart gestaltet sind, dass die zumindest zwei Folienführungselemente (31) bei aktiven Kopplungsmitteln in der radialen Richtung (r) des Folienschlauches (9) lediglich um den gleichen Streckenbetrag bewegbar sind.

3. Blasfolienextrusionsanlage (1) nach einem der vorstehenden Ansprüche, **dadurch gekennzeichnet, dass**
die Kopplungsmittel Aktoren umfassen, die von einer gemeinsamen Steuervorrichtung ansteuerbar sind.

4. Blasfolienextrusionsanlage (1) nach einem der vorstehenden Ansprüche, **dadurch gekennzeichnet, dass**
die Aktoren Lineartriebe sind oder dass mit den Aktoren ein Drehmoment erzeugbar ist, welches auf Funktionspaare aus Spindeln und Muttern derart übertragbar ist, dass das Drehmoment in eine Kraft umgesetzt wird.

5. Blasfolienextrusionsanlage (1) nach dem vorstehenden Anspruch,
**dadurch gekennzeichnet, dass**
mit den Aktoren ein Drehmoment erzeugbar ist, welches auf Funktionspaare aus Spindeln und Muttern derart übertragbar ist, dass das Drehmoment in eine Kraft umgesetzt wird und dass die Drehbewegung der verschiedenen Aktoren regelbar ist.

6. Blasfolienextrusionsanlage (1) einem der vorstehenden Ansprüche,
**dadurch gekennzeichnet, dass**
zumindest eine Stange (32) derart in dem zumindest einen Schiebelager (33) gelagert ist, dass die Stange (32) tangential zu der Umfangsfläche des Folienschlauchs (9,43) gehalten ist.

7. Blasfolienextrusiansanlage (1) nach dem vorstehenden Anspruch,
**dadurch gekennzeichnet, dass**
ein weiteres Schiebelager (33) vorgesehen ist, das zumindest eine Stange (32) oder ein mechanisch mit der Stange (32) verbundenes Element führt.

## Claims

1. A blown film extrusion system (1), which has the following features:
- an annular die gap, from which the film tube (9) can be extruded,
- flattening (7, 13) or squeezing devices (8), that fold the film tube (9),
- a calibration device (20, 30), that is disposed between the die gap and the flattening (7, 13) or squeezing devices (8) and comprises at least two film guiding elements (31), with which the film tube (9) can be guided so as to maintain its round cross-section,
- wherein the diameter of the film tube (9, 43) can be adjusted by changing the relative position of the at least two film guiding elements (31),
- coupling means (32, 33, 35, 38, 39), which couple the movement of at least two film guiding elements (31) to each other,
- the coupling means (32, 33, 35, 38, 39) comprise elements for the mechanical forced coupling of the movement of at least two film guiding elements (31),
**characterized in**
- **that** the elements for the mechanical forced coupling comprise rods (32), which in each case are mounted in at least one sliding bearing (33), wherein the film guiding elements (31) are connected in a rotationally-fixed manner,
- **that** each rod (32) is rotatably articulated mechanically either directly or by means of an intermediate element on at least one holding rod (35), wherein the at least one holding rod (35) is rotatably articulated for its part on a frame (44) of the calibration device.

2. A blown film extrusion system (1) according to any one of the preceding claims,
**characterized in that**
the coupling means (32, 33, 35, 38, 39) are designed in such a manner that the at least two film guiding elements (31) are movable when the coupling means is active in the radial direction (r) of the film tube (9) only by the same amount of distance.

3. A blown film extrusion system (1) according to any one of the preceding claims,
**characterized in that**
the coupling means comprises actuators, which can be controlled by a common control device.

4. A blown film extrusion system (1) according to any one of the preceding claims,
**characterized in that**
the actuators are linear drives or that with the actuators a torque can be generated, which can be transferred to functional pairs comprising spindles and nuts in such a manner that the torque is converted into a force.

5. A blown film extrusion system (1) according to the preceding claim,
**characterized in that**
with the actuators the torque can be generated, which can be transferred to functional pairs comprising spindles and nuts in such a manner that the torque is converted into a force and that the rotational movement of the different actuators is controllable.

6. A blown film extrusion system (1) according to any one of the preceding claims, **characterized in that**
at least one rod (32) is mounted in the at least one sliding bearing (33) in such a manner that the rod is held tangentially to the circumferential surface of the film tube (9, 43).

7. A blown film extrusion system (1) according to the preceding claim,
**characterized in that**
a further sliding bearing (33) is provided, which guides a rod (32) or an element connected mechanically with the rod (32).

## Revendications

1. Installation d'extrusion de film soufflé (1), qui présente les caractéristiques suivantes :
- un interstice de buse annulaire, à partir duquel le film tubulaire (9) peut être extrudé,
- des dispositifs de mise à plat (7 à 13) ou de pressage (8) qui plient le film tubulaire (9),
- un dispositif d'étalonnage (20, 30) qui est disposé entre l'interstice de buse et les dispositifs de mise à plat (7 à 13) ou de pressage (8) et qui comprend au moins deux éléments de guidage de film (31), avec lesquels le film tubulaire (9) peut être guidé de façon à ce qu'il conserve sa section ronde,
- le diamètre du film tubulaire (9, 43) pouvant être réglé par une variation de la position relative des au moins deux éléments de guidage de film (31),
- des moyens de couplage (32, 33, 35, 38, 39) qui couplent le mouvement d'au moins deux éléments de guidage de film (31) entre eux,
- les moyens de couplage (32, 33, 35, 38, 39) comprenant des éléments pour le couplage forcé du mouvement d'au moins deux éléments de guidage de film (31),
**caractérisée en ce que**
- les éléments de couplage mécanique forcé comprennent des tiges (32), qui sont logées chacune dans au moins un palier coulissant (33), les éléments de guidage de film (31) étant reliés de manière solidaire en rotation avec les tiges (32),
- chaque tige (32) est articulée mécaniquement de manière rotative, soit directement soit par l'intermédiaire d'un élément intermédiaire, avec au moins une tige de maintien (35), l'au moins une tige de maintien (35) étant articulée, de son côté, de manière rotative, avec un châssis (44) du dispositif d'étalonnage.

2. Installation d'extrusion de film soufflé (1) selon l'une des revendications précédentes,
**caractérisée en ce que**
les moyens de couplage (32, 33, 35, 38, 39) sont conçus de façon à ce que les au moins deux éléments de guidage de film (31) puissent être déplacés, dans le cas de moyens de couplage actifs, dans la direction radiale (r) du film tubulaire (9), seulement de la même distance.

3. Installation d'extrusion de film soufflé (1) selon l'une des revendications précédentes,
**caractérisée en ce que**
les moyens de couplage comprennent des actionneurs qui peuvent être contrôlés par un dispositif de commande commun.

4. Installation d'extrusion de film soufflé (1) selon l'une des revendications précédentes,
**caractérisée en ce que**
les actionneurs sont des dispositifs d'entraînement linéaires ou **en ce que**, avec les actionneurs, un couple peut être généré, qui peut être transmis à des paires fonctionnelles constituées de broches et d'écrous, de façon à ce que le couple soit converti en une force.

5. Installation d'extrusion de film soufflé (1) selon la revendication précédente,
**caractérisée en ce que**
avec les actionneurs, un couple peut être généré, qui peut être transmis à des paires fonctionnelles constituées de broches et d'écrous, de façon à ce que le couple soit converti en une force et à ce que le mouvement de rotation des différents actionneur puisse être régulé.

6. Installation d'extrusion de film soufflé (1) selon l'une des revendications précédentes,
**caractérisée en ce que**
au moins une tige (32) est logée dans l'au moins un palier coulissant (33) de façon à ce que la tige (32) soit maintenue de manière tangentielle par rapport à la surface circonférentielle du film tubulaire (9, 43).

7. Installation d'extrusion de film soufflé (1) selon la revendication précédente,
**caractérisée en ce que**
un autre palier coulissant (33) est prévu, qui guide au moins une tige (32) ou un élément relié mécaniquement avec la tige (32).
